# EUROPEAN PATENT APPLICATION

(11) **EP 4 769 040 A1**
(43) Date of publication of application: **01.07.2026**
(21) Application number: 24223485.4
(22) Date of filing: 27.12.2024
(51) Int. Cl.: G05B 19/05

(54) **METHOD AND SYSTEM FOR GENERATING CONTINUOUS FUNCTION CHART FOR CONTROLLING SUBSTATIONS**

(71) Applicant: Siemens Aktiengesellschaft, 80333 München (DE)
(72) Inventor: AGARWAL, Abhishek, 560034 Bangalore, Karnataka (IN); H G, MANJUNATHA, 560058 Bangalore (IN); RAJAN S, Simpson, 607803 Neyveli-, Tamil nadu (IN)
(74) Representative: Patentanwaltskanzlei WILHELM & BECK

(57) **Abstract**

Disclosed is a method (300) and a system (100) for generation of a Continuous Function Chart (CFC). The method (300) includes receiving a Single Line Diagram (SLD) associated with one or more substations (160a, 160b, 160n). The SLD comprises a plurality of topology equipments. Further, the method (300) includes identifying a category associated with each topology equipment of the plurality of topology equipments, in the SLD. Furthermore, the method (300) includes determining a set of operational rules corresponding to the identified category of each topology equipment. Moreover, the method (300) includes generating the CFC corresponding to the each topology equipment based on the determined set of operational rules.

## Description

The present invention generally relates to Continuous Function Charts (CFCs), and more particularly relates to a method and system for generating the CFC for controlling substations.

Substations are electric system facilities that are capable of performing various functions such as voltage transformation, switching operation, protection, and managing and controlling power in a transmission line. For example, the substations can be used to step up or step down the electricity. The substations include topology equipments such as transformers, circuit breakers, disconnect switches, protection relays, isolators, capacitor banks, grounding systems, batteries, etc.

These equipments are used for controlling various functions of the substations. For example, the circuit breakers are employed to interrupt an electrical circuit in an overload or a short circuit event within a transmission line associated with the substation. To control various functions of the topology equipments, a Continuous Function Chart (CFC) is required for each substation. The CFCs are a part of IEC 61131-3 standard which defines programming languages for industrial automation systems. In CFC, different functions or function blocks are represented as boxes, and the connections between them represent the flow of data. The boxes can be basic functions, such as addition, subtraction, multiplication, and division, or more complex function blocks that encapsulate a specific control task. The graphical nature of CFC makes it relatively easy to understand and troubleshoot, even for people without extensive programming experience. A user can see the flow of data and the interconnections between different parts of the system, which can aid in debugging and modification of the control algorithm.The CFC may help to visualize various issues that arise in the substations and identify the topology equipments on which the fault is raised. The CFC eliminates the complexities of configuring logic for interlock, voltage selection, bay sequencing, and auto-reclose priorities.

Generally, the CFC may be generated by users manually using a Single Line Diagram (SLD) associated with the substations. The SLD refers to a representation of an electrical system such as the substations that use a single line to depict the topology equipments along with circuits thereof. However, the SLDs for complex circuits are much more complex that increase the complexity of operation rules associated with the topology equipments. In such scenarios, the operational rules for the topology equipments increase the complexity of generation of the CFC multifold times.

Conventionally, the generation of the CFC needs manual intervention which takes hours to create/generate the CFC especially for complex and largescale circuits. Furthermore, the generation of the CFC for the SLD which includes complex circuits, is often prone to human errors. Moreover, these human errors in generating the CFC may sometimes lead to costly mistakes if the CFC is not configured properly. This may even delay configuration of the CFC. Furthermore, even modification of the CFC due to any changes in the SLD layout is a very time consuming and cumbersome process.

In light of the above, there remains a need for an improved method and system for generating the CFC in a time bound manner. Further, there needs to be a method by which the CFC can be generated in such a way that the generated CFC is devoid of any errors which may occur due to the manual generation of the CFC which may be prone to human errors.

The present invention seeks to overcome these limitations by generating the CFC automatically for the SLD including the complex circuits. Specifically, when the CFC is generated automatically based on the SLD which is validated using a trained Artificial Intelligence (Al) model, an overall time of the generation of the CFC is reduced without compromising the quality of the generated CFC. Therefore, the present invention enhances the efficiency in the generation of the CFC and provides an improved CFC with minimal or no error.

The object of the present invention is achieved by a computer-implemented method for generation of a Continuous Function Chart (CFC) to control functions associated with one or more substations. The method includes receiving, by one or more processors, a Single-Line Diagram (SLD) associated with the one or more substations. The SLD includes a plurality of topology equipments. The method further includes identifying, by the one or more processors, a category associated with each topology equipment of the plurality of topology equipments, in the SLD. Further, the method includes determining, by the one or more processors, a set of operational rules corresponding to the identified category of each topology equipment. Furthermore, the method further includes generating, by the one or more processors, the CFC corresponding to each topology equipment based on the determined set of operational rules.

In the present invention, complex circuits of the SLD are validated using the trained AI model, which reduces complexity of the SLD. In advantageous effect, the category of each topology equipment is identified accurately so that the set of operation rules may be determined without any complexities corresponding to the identified category of each topology equipment based on functionalities of each topology equipment in the various conditions. Therefore, the CFC is generated corresponding to each topology equipment based on the determined set of operation rules without any complexity. This reduces the time for the generation of the CFC and ensures reliable and error-free configuration of the CFC.

In one or more embodiments, the set of operation rules is predefined for the identified category of topology equipment. In an advantageous effect, the set of operation rules allows the generation of the CFC for controlling the one or more substations remotely with minimum or zero human effort.

In one or more embodiments, the SLD is in the form of a System Specification Description (SSD). In an advantageous effect, the SSD outlines operational requirements of the one or more substations which is easy to understand andimplement. The SSD serves as a guide for the design, development, and implementation of the substations, and helps ensure that the substations meets the desired performance, safety, and reliability standards.

In one or more embodiments, for receiving the SLD associated with the one or more substations, the method includes generating, by the one or more processors, the SLD associated with the one or more substations. In an advantageous effect, the SLD may be generated to effectively represent the plurality of the topology equipments. The method further includes validating, by the one or more processors, the generated SLD for compliance with a predefined set of parameters. In an advantageous effect, the validation of the SLD ensures clarity, accuracy, and a thorough representation of the plurality of topology equipments and connections thereof.

In one or more embodiments, for validating the generated SLD, the method comprises systematically examining each topology equipment within a bay based on a specific power system standard. In an advantageous effect, each topology equipment is systematically examined so that the category of the topology equipment is identified accurately.

In one or more embodiments, the predefined set of parameters indicates standard parameters for the SLD associated with the one or more substations. In an advantageous effect, the SLD may be checked for compliance with the standard parameters to ensure grounding systems and appropriate labeling in the SLD.

In one or more embodiments, the CFC indicates a representation of continuous control functions and continuous signals associated with the one or more substations. Advantageously, the CFC enables control of the one or more substations remotely, and thereby enables effective and efficient resolutions for any issue that may occur in the one or more substations. This may be done without compromising the safety of operators.

In one or more embodiments, the method further includes receiving, by one or more processors, one or more user-defined rules based on the generated CFC. Further, the method includes regenerating, by one or more processors, the CFC based on the one or more user-defined rules. In an advantageous effect, the present disclosure enables modification of the determined set of operation rules so that the user may add or modify as per the requirement associated with the substation associated with the user.

In one or more embodiments, for identifying, by the one or more processors, the category associated with each topology equipment of the plurality of topology equipments, in the SLD, the method includes automatically parsing, by one or more processors, the SLD comprising the plurality of topology equipments. The method also includes determining, by one or more processors, each topology equipment of the plurality of topology equipments. The method also includes inputting, by one or more processors, each topology equipment of the plurality of topology equipments to a category model. The method also includes identifying, by the one or more processors, the category associated with each topology equipment of the plurality of topology equipment using the category model. The category model is a pretrained model. Advantageously, a category of each topology equipment is effectively and accurately identified.

Further, the object of the present invention is achieved by a system for generating a Continuous Function Chart (CFC) for controlling one or more substations is disclosed. The system includes a memory and one or more processors communicatively coupled to the memory. The memory includes programmable instructions executable by the one or more processors. The programmable instructions, when executed by the one or more processors, cause the one or more processors to receive a Single Line Diagram (SLD) associated with the one or more substations, wherein the SLD comprises a plurality of topology equipments. Further, the one or more processors are configured to identify a category associated with each topology equipment of the plurality of topology equipments, in the SLD. Furthermore, the one or more processors are configured to determine a set of operational rules corresponding to the identified category of each topology equipment. The one or more processors are also configured to generate the CFC corresponding to each topology equipment based on the determined set of operational rules.

In embodiments, the system as claimed is implemented to carry out the method as indicated above or below with respect to embodiments of the method.

The object of the present invention is further achieved by a computer-program product. The computer-program product has machine-readable instructions stored therein, that when executed by one or more processors, cause the one or more processors to perform steps of the method, as discussed throughout the present invention.

The object of the present invention is further achieved by a non-transitory computer-readable medium is disclosed. The non-transitory computer-readable medium is encoded with executable instructions, that when executed by one or more processors, cause the one or more processors to perform steps of the method, as discussed throughout the present invention.

To further clarify the advantages and features of the present invention, a more particular description of the disclosure will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 illustrates a schematic block diagram representation of a system for generation of a Continuous Function Chart (CFC) for controlling one or more substations, according to one or more embodiments of the present invention;
FIG. 2 illustrates a block diagram representation of a plurality of modules of the system for the generation of the CFC for controlling the one or more substations, according to one or more embodiments of the present invention; and
FIG. 3 illustrates a flowchart representation of a computer-implemented method for the generation of the CFC for controlling the one or more substations, according to one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Examples of a method, a system, and a computer-program product for generation of a Continuous Function Chart (CFC) for controlling one or more substations are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Conventional methods and systems, are based on manual generation of CFC that do not consider validation of the SLDs used for the generation.

Unlike to the conventional methods and systems, the proposed solution automatically generates the CFC based on SLDs. In the proposed solution, the SLDs are validated prior to the generation of the CFC to avoid any errors and improve the quality of the generated CFC.

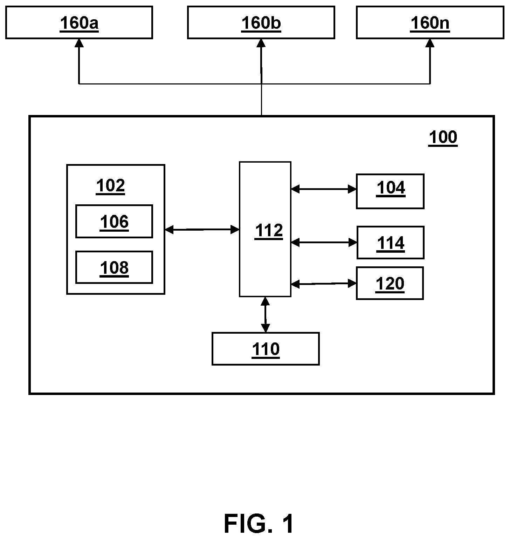

FIG. 1 illustrates a schematic block diagram representation of a system 100 for generation of a Continuous Function Chart (CFC) for controlling one or more substations 160a, 160b, 160n, according to one or more embodiments of the present invention. In an embodiment, the CFC may indicate a representation of continuous control functions and continuous signals associated with the one or more substations 160a, 160b, 160n. The CFC may visualize behavior of the one or more substations 160a, 160b, 160n. For example, the CFC may correspond to a graphical representation of various topology equipments associated with the one or more substations 160a, 160b, 160n representing an interaction among each of such topology equipments. The CFC enables monitoring of the functions associated with the one or more substations 160a, 160b, 160n. Further, the CFC supports identification of faults and optimization of performance of the one or more substations 160a, 160b, 160n. The CFC includes blocks representing the topology equipments, connections line indicating flow of signals among the topology equipments, and one or more signal lines.

The one or more substations 160a, 160b, 160n refers to electric system facilities that are capable of performing various functions such as voltage transformation, switching operation, protection, and managing and controlling power in a transmission line. For example, the one or more substations 160a, 160b, 160n substations may be used to step up or step down the electricity. The substations include the topology equipments such as transformers, circuit breakers, disconnect switches, protection relays, isolators, capacitor banks, grounding systems, batteries, etc., to implement the one or more intended functionalities. The system 100 is connected to the substations 160a, 160b, 160n and may be any device which is used to control the substations 160a, 160b, 160n such as for example a computer system.

The system 100 may include a memory 102 which is in communication with one or more processors 104. The memory 102 is configured to store instructions for generating the CFC which are executable by the one or more processors 104, alternatively referred to as processors 104 for the sake of brevity. In one embodiment, the memory 102 communicates via a bus 112 within the system 100. The memory 102 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the processors 104. In alternative examples, the memory 102 is separate from the processors 104 such as a cache memory of a processor, the system memory, or other memory. The memory 102 is an external storage device or a database 106 for storing data. The memory 102 is operable to store instructions executable by the processors 104. The functions, acts or tasks illustrated in the figures or described are performed by the programmed processor for executing the instructions stored in the memory 102. The functions, acts, or tasks are independent of the particular type of instructions set, storage media, processor, or processing strategy and may be performed by software, hardware, integrated circuits, firmware, micro-code, and the like, operating alone or in combination. Likewise, processing strategies include multiprocessing, multitasking, parallel processing, and the like. Further, the memory 102 may include a database which can be configured to store the SLDs along with the corresponding CFCs.

Further, the memory 102 includes an operating system 108 for performing one or more tasks of the system 100, as performed by a generic operating system in the communications domain. In one embodiment, the database 106 is configured to store the information as required by the processors 104 to perform one or more functions for generating the CFC for controlling functions associated with the one or more substations 160a, 160b, 160n.

In an embodiment, the system 100 include the processors 104 in communication with the memory 102. As a non-limiting example, the processors 104 are a single processing unit or a set of units each including multiple computing units. The processors 104 are implemented as one or more microprocessors, microcomputers, microcontrollers, digital signal processors, central processing units, state machines, logic circuitries, and/or any devices that manipulate signals based on operational instructions (computer-readable instructions) stored in the memory 102. Among other capabilities, the processors 104 has connectivity with the bus 112 to fetch and execute computer-readable instructions and data stored in the memory 102. The processors 104 include one or a plurality of processors. The plurality of processors is further implemented as a general-purpose processor, such as a central processing unit (CPU), an application processor (AP), or the like, a graphics-only processing unit, such as a graphics processing unit (GPU), a visual processing unit (VPU), and/or an Al-dedicated processor such as a neural processing unit (NPU). The plurality of processors controls the processing of the input data in accordance with a predefined operating rule or an artificial intelligence (Al) model stored in the memory 102. The predefined operating rule or the Al model is provided through training or learning.

The processors 104 are disposed in communication with one or more Input/Output (I/O) devices via an Input/Output (I/O) interface 110. The I/O interface 110 employs communication Code-Division Multiple Access (CDMA), High-Speed Packet Access (HSPA+), Global System for Mobile Communications (GSM), Long-Term Evolution (LTE), WiMax, and the like. In another embodiment of the present invention, the I/O interface 110 employs ethernet, industrial wireless Local Area Network (LAN), Process Field Bus (PROFIBUS), Actuator Sensor (AS) Interface, and the like. In an embodiment, the I/O interface 110 has a connection with the bus 112 and may enable the system 100 to communicate with other systems for receiving and transmitting information.

In an embodiment, the I/O interface 110 may include one or more of a keyboard, a mouse, a touchscreen display, a microphone, or any other hardware component that enables the user to interact with the system 100.

In an embodiment, the system 100 may include a user interface 114. The user interface 114 may take various forms depending on the specific application of the system 100. Further, the user interface 114 may also be in the form of a display to receive inputs and also display an output response. It is to be understood that, when reference is made in the present invention to the term "display" this refers generically to a display screen which may be provided for displaying information associated with the generation of the CFC. The user interface 114 is used to display the final generated CFC. The user may modify the CFC based on their preferenes by providing the inputs on the user interface 114.

In various embodiments, the system 100 may be a cloud-based system, such as a cloud server. In such an embodiment, the functionality of the system 100 may be provided by the cloud server, and the details provided with respect to the system 100 would be applicable for the cloud server. In another embodiment, the system 100 may be hosted on one or more electronic devices such as User Equipment (UE). In an embodiment, the system 100 is provided in a distributed manner, in that, one or more components and/or functionalities of the system 100 are provided through an electronic device, and one or more components and/or functionalities of the system 100 are being provided through a cloud-based unit, such as a cloud storage or a cloud-based server. In a non-limiting example, the database 106 may be provided through the cloud storage and the processors 104 may be integrated with the one or more electronic devices.

In one or more embodiments, the system 100 may be embodied as a computer-program product that includes instructions or receives and executes instructions responsive to a propagated signal. Further, the instructions may be transmitted or received over the network via a communication port or interface or using a bus (not shown). The communication port or interface may be a part of the one or more processors 104 or may be a separate component. The communication port may be created in software or may be a physical connection in hardware. The communication port may be configured to connect with the network, external media, the display, or any other components in the system 100. The connection with the network may be a physical connection, such as a wired ethernet connection, or may be established wirelessly. Likewise, the additional connections with other components of the system 100 may be physical or may be established wirelessly. The network may alternatively be directly connected to the bus. For the sake of brevity, the architecture, and standard operations of the memory 102 and the one or more processors 104 are not discussed in detail.

In an embodiment, the computer-program product, having machine-readable instructions stored therein, when executed by the one or more processors 104, causes the one or more processors 104 to perform the method for generating the CFC for controlling the one or more substations 160a, 160b, 160n.

In one or more embodiments the system 100 may be embodied as a non-transitory computer-readable medium encoded with executable instructions. The executable instructions, when executed by the one or more processors 104, cause the one or more processors 104 to perform a method for generating the CFC for controlling the one or more substations 160a, 160b, 160n. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

In an embodiment, the system 100 may be in communication with the one or more substations 160a, 160b, 160n via a network. In an exemplary implementation, the network may include a wireless network or a wired network. For example, the network corresponds to cellular networks or mobile networks, such as 3G, 4G, 5G, pre-5G, 6G network, or any other wireless communication network. In an embodiment, the processors 104 of the system may be configured to control the one or more functions the one or more substations 160a, 160b, 160n.

In one or more embodiment, one or more controlling devices may be provided to remotely control the one or more functions of the one or more substations. In non-limiting examples, the one or more functions may include but are not limited to voltage selection, bay sequencing, and auto-reclose priorities associated with the one or more substations 160a, 160b, 160n.

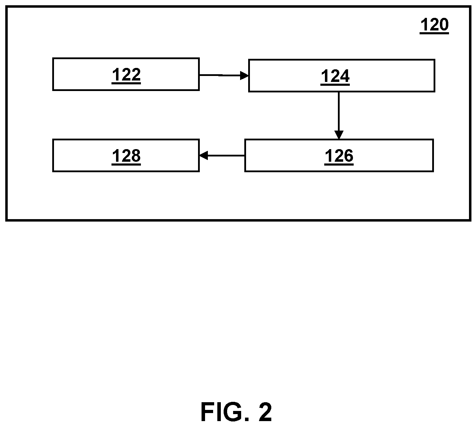

In an embodiment of the present invention, the system 100 may include a CFC generation module 120 that has a connectivity with the bus 112. In an embodiment, the CFC generation module 120 of the system 100 are discussed in conjunction with FIG. 2.

FIG. 2 illustrates a schematic block diagram representation of the CFC generation module 120, according to an embodiment of the present invention. The - CFC generation module 120 may include a receiving module 122, an identifying module 124, a determining module 126, and the generating module 128,. In an embodiment, the receiving module 122, the identifying module 124, the determining module 126 and the generating module 128 may be in communication with each other. In an embodiment, the receiving module 122 may be configured to receive a Single Line Diagram (SLD) which may include a plurality of topology equipments. In an embodiment the receiving module 122 may be configured to receive the readyily available SLD which is already generated. In another embodiment, the receiving module 122 may be configured to generate the SLD in case the user provides all the details for generation of the SLD. The receiving module 122 also includes an artificial intelligence (Al) module for validating the SLD generated as per specific standards. The Al module is trained with various industry standards documentations associated with the automation and power system domain, the historical data associated with the SLD generation etc. The Al module checks if the SLD received or generated is in compliance with any of the industry standards and detect anomalies in SLDs, if any. - In case any anomalies exists then the SLD is either automatically modified to comply with the standards or the user is notified of the anomalies in the SLD.

Further, the identifying module 124 may be configured to identify a category associated with each topology equipment of the plurality of topology equipments which are provide din the SLD. Here the identifying module 124 can be for example an artificial inteeligence and machine learning (AI/ML) based model which is trained using historical categories associated with multiple topology equipments, user defined set of categories, standard categories, etc. The AI/ML model may also be trained with the configuration and functional aspects of the topology equipments in various SLDs over a period of time to be able to identify the category of the topology equipments.

Further, the determining module 126 may be configured to determine a set of operation rules corresponding to the identified category of each topology equipment.

Furthermore, the generating module 128 may be configured to generate the CFC corresponding to each topology equipment based on the determined set of operational rules.

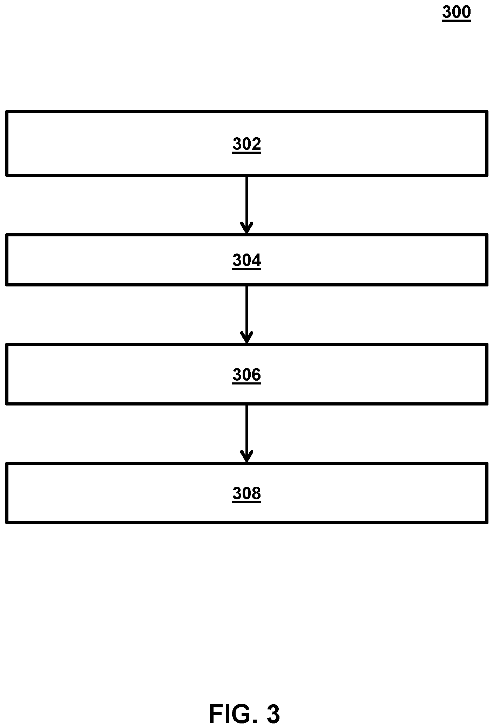

Now, the present invention is explained in detail in reference with a method 300 disclosed in FIG. 3. More specifically, referring to FIGS 1 -3 in combination, the various steps of the method 300 as described hereinafter may be executed in the system 100, or specifically in the processors 104 of the system 100, for generation of the CFC for controlling the one or more substations 160a, 160b, 160n.

FIG. 3 illustrates a flowchart representation of a method (as represented by reference numeral 300) for generation of the CFC for controlling the one or more substations 160a, 160b, 160n, according to an embodiment of the present invention. In an embodiment, the method 300 is a computer implemented method and executed by the processors 104 of the system 100. In one or more embodiments, the steps of the method 300 may be performed by the CFC generation module 120 associated with the processors 104. The method 300 of the present invention is illustrated and described as a sequence of steps, however, the method 300 may be contemplated that various embodiments of the method 100 may be performed in any order or a combination and need not include all of the illustrated steps.

In embodiments of the present invention, at step 302, the method 300 may include receiving, by the receiving module 122, the Single Line Diagram (SLD) associated with the one or more substations 160a, 160b, 160n. In an embodiment, the SLD may include the plurality of topology equipments associated with each of the one or more substations 160a, 160b, 160n. In an embodiment, the SLD may herein refer to a representation of the one or more substations 160a, 160b, 160n that may use a single line to depict the plurality of the topology equipments along with circuits thereof. In one embodiment, the SLD may be in the form of System Specification Description (SSD). In an embodiment, the SSD may include a detailed document that outlines operational requirements of the one or more substations 160a, 160b, 160n. The SSD for power system engineering is a detailed document that outlines the technical requirements and specifications for a power system engineering project. This document serves as a guide for the design, development, and implementation of the power system, and helps ensure that the system meets the desired performance, safety, and reliability standards. The SSD will include a brief overview of the power system project, its purpose, and its scope. It also includes system requirements such as voltage levels, capacity, reliability, and safety standards and system architecture which is a description of the overall design of the power system, including its components, their functions, and their interactions. Further, the SSD includes expected performance of the power system, including its efficiency, stability, and response to disturbances. The system protection details such as description of the protection systems and measures in place to ensure the safety and reliability of the power system, such as circuit breakers, relays, and fault detection systems are also provided in the SSD. The SSD also includes system control information such as details of the control systems and measures in place to manage and operate the power system, such as SCADA (Supervisory Control and Data Acquisition) systems, remote monitoring, and automation; system testing and commissioning procedures to be followed to ensure that the power system meets the specified requirements and operates as intended. The SSD also includes maintenance and support requirements for the power system, including routine maintenance, repairs, and upgrades.

In an embodiment to receive the SLD, firstly, the SLD associated with the one or more substations (160a, 160b, 160n) may be generated. The SLD may be generated using any existing SLD generation tools. Thereafter, the generated SLD may be validated for compliance with a predefined set of parameters using the Al model. In an embodiment, the predefined set of parameters may herein refer to standard parameters for the SLD associated with the one or more substations (160a, 160b, 160n). In an embodiment, the standard parameters may include local electrical codes and industry standards. For example, the compliance with the standard parameters may be checked by ensuring grounding systems and appropriate labeling in the SLD.

In one or more embodiments, the validation of the SLD may include systematically examining each topology equipment in a bay using a chart filter technique which is used to refine and process data before it is visualized or used in control systems. For example, the validation of the SLD may include validating a substation to ensure that the diagram corresponding to the substation accurately reflects the electrical configuration and meets the predefined set of parameters. More specifically, each topology equipment may be systematically examined based on determining an interaction of each topology equipment with other topology equipments within the SLD. In an advantageous effect, the validation of the SLD may ensure clarity, accuracy, and a thorough representation of the plurality of topology equipments and connections thereof.

Again, referring to FIG. 3, at step 304, the method 300 may include identifying the category associated with each topology equipment of the plurality of topology equipments, in the SLD. The category associated a topology equipment may be defined based on configuration and functional aspects of the topology equipment using a category model. Here, the SLD is automatically parsed to determine each topology equipment of the plurality of topology equipments. The category model analyzes the SLD and extracts information related to the topology equipments, their configuration and functional aspects, etc. This can be performed by any existing methods such as Optical Character Recognition (OCR), object detection, image segregation, etc. Once the topology equipment information is extracted, they are used for identifying the category of the topology equipment. This can be done based on existing methods such as for example but not limited to convolutional neural networks (CNNs), etc.

For instance, the topology equipment may be classified in one of a primary category or a secondary category. The primary category may include the topology equipments that may be responsible for the distribution, transformation, and protection of electrical power within the substation. Example of the topology equipments within the primary category may include, but not limited to, power transformers, circuit breakers, disconnect switches, etc. The secondary category may include the topology equipment that may be responsible for monitoring, controlling, and protecting the primary equipment within the substation. Example of the topology equipments within the secondary category may include, but not limited to, protection relay, control panels, etc. The topology equipment may also be categorized within an auxiliary category that may include topology equipments responsible for operation and maintenance of the substation.

In an embodiment, the category of each topology equipment may be identified based on systematically examining each topology equipment. More specifically, functions associated with the plurality of the topology equipments may be determined after systematically examining each topology equipment, which may lead to determination of the category of each topology equipment. For example, a function of one of the topology equipment is to protect an electrical circuit from damage caused by excess current within a substation, in this case, the topology equipment is from the category of the primary category. In another example, a function of the one of topology equipment is to improve power factor and voltage regulation by compensating for reactive power, in this case, the topology equipment may be from the secondary category. In yet another embodiment, the category associated with each topology equipment may be defined by the user.

In one embodiment, each topology equipment of the plurality of topology equipments is inputted to a category model. Thereafter, the category associated with each topology equipment of the plurality of topology equipments is identfied using the category model. The category model is a trained model.

Further, at step 306, the method 300 may include determining the set of operational rules corresponding to the identified category of each topology equipment. In an embodiment, the set of operation rules may herein to predefined rules that may be followed to control function of each topology equipment. In an embodiment, prior to determination of the set of operational rules, various information associated with the SLD may be identified. For example, a number of the plurality of topology equipments, a connection between the topology equipments, and the like.

In an embodiment, each topology equipment may have a different set of operational rules based on the functional requirements of each topology equipment. In an embodiment, the function/s of each topology equipment may be associated with various conditions that may occur within the substation. The various conditions may include but not limited to electrical faults, equipment failure, temperature variations, voltage fluctuations, monitoring and control conditions, protection, and the like. Therefore, based on the function/s of each topology equipment in various conditions, the set of operational rules corresponding to the identified category of each topology equipment may be defined. For example, if a topology equipment is asscoited with the condition of status monitoring then the operational rules may include continuous monitoring of the status of switchgear, transformers, and other critical equipments. Similalry, if the topology equipment isassociated with the c**ontrol operations** then the operational rules are to perform control operations such as opening and closing circuit breakers and switches, ensure synchronization checks before connecting different parts of the network, etc. In an advantageous effect, the set of operation rules allows the generation of the CFC for controlling the one or more sub-stations 160a, 160b, 160n with minimum or zero human effort and the apt operation of the topological equipments are taken care of in the CFC and are well represented.

Consider an exemplary scenario where the set of operations for interlocking in the substation is discussed. In an embodiment, two incomers and bus coupler circuit breakers use standard criteria to prevent parallel feed from the two incomers onto a common bus. The interlocking allows the following conditions:
- The two incomer circuit breakers closed () with the bus coupler circuit breakers open ().
- Left incomer and the bus coupler circuit breakers closed () with a right incomer circuit breaker open ().
- Right incomer and the bus coupler circuit breakers closed () with a left incomer circuit breaker open ().

In one or embodiments, the set of operation rules may be modified by one or more user-defined rules which may be received from the user. More specifically, the present invention may allow the user to create or modify as per the requirement. For instance, if the substation associated with the user does not include the same number of the topology equipments as provided in the predefined set of operation rules, the user may replace or modify the set of operation rules with the one or more user-defined rules, which may be shared with other substations associated with the user.

In one or more embodiments, the user may verify a consistency of the set of operation rules or the one or more user-defined rules, and prompt the user, if the system 100 flags any inconsistency in the set of operation rules or the one or more user-defined rules.

Referring to FIG. 3, at step 308, the method 300 may include generating the CFC corresponding to each topology equipment based on the determined set of operational rules. Therefore, once the operational rules aredetermined for each of the topology equipments in the input SLD, then the system 100 automatially generates the corresponding CFC. The graphical nature of the CFC makes it easy to understand and troubleshoot, even for users without extensive programming experience. A user can see the flow of data and the interconnections between different parts of the system, which can aid in debugging and modification of the control algorithm. Therefore, when the user already has the SLD they need not invest a huge amount of time in generation of the CFC and this entire process can be automated. The CFC provides high degree of modularity which means that each function block can be designed, tested, and debugged independently. This makes the control system easier to maintain and update. Further, any changes in the SLD as per the requirement or changes in the substation environment can be quickly reflected in the CFC by the proposed solution. Also, once a function block has been developed in the CFC the same can be stored in the memory 102 and can be used in generation of another portion of the same CFC or for generating a new CFC overall using a different SLD. As a result, the reusability fo the SLD-CFC combination promotes code reusability and reduces the development time. Further, the proposed solution ensures that the CFC is easily generated for sophisticated control logics efficiently and with greater clarity.

In an exemplary embodiment, the conditions mentioned in the above paragraphs of the description may depict the exemplary set of operations rules that may be used to generate the CFC. In an embodiment, the CFC may help the users to visualize operational data associated with the one or more substations 160a, 160b, 160n and interaction between the plurality of topology equipments associated with each of the one or more substations 160a, 160b, 160n. Further, the CFC may help to visualize various issues that arise in the one or more substations 160a, 160b, 160n and identify the topology equipment among the plurality of topology equipments on which the fault may be raised. In an exemplary scenario, when there is a sudden voltage rise in an electrical circuit associated with the substation, the sudden voltage rise may be visually represented to the user using the generated CFC.

In one or more embodiments, the generated CFC may be configured in the one or more control devices for remotely controlling the functions of one or more substations 160a, 160b, 160n. The present invention provides for various technical advancements based on the key features discussed above.

In the present invention, the complex circuits of the SLD are validated using the trained Al model, which ensures compliance of the SLD with automation stnadards and thereby when the CFC is generated based on these stnards complaint SLDs the proposed solution prevents errors in the generated CFC. In advantageous effect, the category of each topology equipment is identified accurately so that the set of operation rules may be determined without any complexities corresponding to the identified category of each topology equipment based on functionalities of each topology equipment in the various conditions. Therefore, the CFC may be generated corresponding to each topology equipment based on the determined set of operation rules without any complexity. This reduces the time for the generation of the CFC as compared to the manual generation of the CFC which takes hours. For instance, the CFC for the complex circuits of the SLD may be generated in less than 5 minutes.

Further, in the present invention, the method 300 of generating the CFC may not only save valuable time for the user but also minimize the risk of costly mistakes that can occur in conventional solutions that need manual intervention. More specifically, by seamlessly automating the CFC generation process, the CFC generated in the present invention, guarantees reliable and error-free configurations, enabling the user to focus on other critical tasks without compromising quality or safety.

Furthermore, in the present invention, the set of operational rules may be modified or replaced by the one or more user-defined rules, thereby enabling the user to use the set of operation rules as per the requirement associated with the substation associated with the user.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the disclosure.

Unless otherwise defined, all technical and scientific terms used herein have the same meaning as commonly understood by one ordinary skilled in the art to which this disclosure belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein may be practiced with modification within the scope of the embodiments as described herein.

### LIST OF REFERENCE NUMERALS

| | |
|---|---|
| System | 100 |
| Method | 300 |
| Method steps | 302, 304, 306, 308 |
| One or more substations | 160a, 160b, 160n |
| Memory | 102 |
| One or more processors | 104 |
| Database | 106 |
| Operating system | 108 |
| Input/output (I/O) interface | 110 |
| Bus | 112 |
| User Interface | 114 |
| CFC generation module | 120 |
| Receiving module | 122 |
| Identifying module | 124 |
| Determining module | 126 |
| Generating module | 128 |

## Claims

1. A computer-implemented method (300) for generation of a continuous function chart (CFC) to control functions associated with one or more substations (160a, 160b, 160n), the method comprising e
receiving (302), by one or more processors (104), a Single Line Diagram (SLD) associated with the one or more substations (160a, 160b, 160n), wherein the SLD comprises a plurality of topology equipments;
**characterized by**,
identifying (304), by the one or more processors (104), a category associated with each topology equipment of the plurality of topology equipments, in the SLD;
determining (306), by the one or more processors (104), a set of operational rules corresponding to the identified category of each topology equipment; and
generating (408), by the one or more processors (104), the CFC corresponding to each topology equipment based on the determined set of operational rules.

2. The computer-implemented method (300) according to claim 1, wherein the set of operational rules are predefined for the identified category of each topology equipment.

3. The computer-implemented method (300) according to claim 1, wherein the SLD is in form of System Specification Description (SSD).

4. The computer-implemented method (300) according to claim 1, wherein receiving (402), by one or more processors (104), the single line diagram associated with the one or more substations (160a, 160b, 160n) comprises:
generating, by one or more processors (104), the SLD associated with the one or more substations (160a, 160b, 160n); and
validating, by one or more processors (104), the generated SLD for compliance with a predefined set of parameters.

5. The computer-implemented method (300) according to claim 4, wherein validating the generated SLD comprises systematically examining each topology equipment within a bay based on a specific power system standard.

6. The computer-implemented method (300) according to claim 4, wherein the predefined set of parameters indicates standard parameters for the SLD associated with the one or more substations (160a, 160b, 160n).

7. The computer-implemented method (300) according to any of the preceding claims, wherein the CFC indicates a representation of continuous control functions and continuous signals associated with the one or more substations (160a, 160b, 160n).

8. The computer-implemented method (300) according to claim 1, further comprising:
receiving, by one or more processors (104), one or more user-defined rules based on the generated CFC; and
regenerating, by one or more processors (104), the CFC based on the one or more user-defined rules.

9. The computer-implemented method (300) according to claim 1, wherein identifying (304), by the one or more processors (104), the category associated with each topology equipment of the plurality of topology equipments, in the SLD comprises:
automatically parsing, by one or more processors (104), the SLD comprising the plurality of topology equipments;
determining, by one or more processors (104), each topology equipment of the plurality of topology equipments;
inputting, by one or more processors (104), each topology equipment of the plurality of topology equipments to a category model; and
identifying (304), by the one or more processors (104), the category associated with each topology equipment of the plurality of topology equipments using the category model.

10. The computer-implemented method (300) according to claim 9, wherein the category model is a pretrained model.

11. A system (100) for generation of a continuous function chart (CFC) to control functions associated with one or more substations (160a, 160b, 160n), the system (100) comprises:
a memory (102); and
one or more processors (104) communicatively coupled to the memory (102), wherein the memory (102) comprises programmable instructions which, when executed by the one or more processors (104), cause the one or more processors (104) to:
receive a Single Line Diagram (SLD) associated with the one or more substations (160a, 160b, 160n), wherein the SLD comprises a plurality of topology equipments;
**characterized by**,
identify a category associated with each topology equipment of the plurality of topology equipments, in the SLD;
determine a set of operational rules corresponding to the identified category of each topology equipment; and
generate the CFC corresponding to each topology equipment based on the determined set of operational rules.

12. A computer-program product, having machine-readable instructions stored therein, which when executed by one or more processors (104), causes the one or more processors (104) to perform a method (300) according to any of the claims 1 to 10.

13. A non-transitory computer-readable medium encoded with executable instructions which, when executed by one or more processors (104), cause the one or more processors (104) to perform a method (300) according to any of the claims 1 to 10.
